(19) Europäisches Patentamt
European Patent Office
Office européen des brevets

(11) **EP 4 462 532 A1**

(12) **EUROPEAN PATENT APPLICATION**

(43) Date of publication:
**13.11.2024 Bulletin 2024/46**

(21) Application number: **24164026.7**

(22) Date of filing: **18.03.2024**

(51) International Patent Classification (IPC):
*H01M 10/04* (2006.01)     *H01M 10/0567* (2010.01)
*H01M 10/0568* (2010.01)     *H01M 10/0569* (2010.01)
*H01M 10/0585* (2010.01)     *H01M 10/0587* (2010.01)

(52) Cooperative Patent Classification (CPC):
**H01M 10/0585; H01M 10/0468; H01M 10/0567;
H01M 10/0568; H01M 10/0569; H01M 10/0587;**
H01M 10/0525; H01M 2300/004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.05.2023 JP 2023075495**

(71) Applicant: Prime Planet Energy & Solutions, Inc.
**Chuo-ku
Tokyo
103-0022 (JP)**

(72) Inventors:
• **NOMURA, Nao
Tokyo, 103-0022 (JP)**
• **FUJITA, Hideaki
Tokyo, 103-0022 (JP)**
• **NISHIDE, Daisuke
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **NON-AQUEOUS ELECTROLYTE SECONDARY BATTERY AND BATTERY PACK**

(57)     A non-aqueous electrolyte secondary battery comprises an electrode assembly and an electrolyte solution. The electrode assembly is a wound-type electrode assembly or a stack-type electrode assembly each of which comprises a positive electrode plate having an active material layer. To the non-aqueous electrolyte secondary battery, a restraining pressure of 0.5 MPa or more is applied in a stacking direction of the positive electrode plates. The electrolyte solution includes $LiFSO_3$, and the electrolyte solution has an electrical conductivity of 0.86 S/m or more at 25°C.

**Description**

CROSS REFERENCE TO RELATED APPLICATIONS

This nonprovisional application is based on Japanese Patent Application No. 2023-075495 filed on May 1, 2023, with the Japan Patent Office, the entire contents of which are hereby incorporated by reference.

BACKGROUND OF THE INVENTION

Field of the Invention

The present invention relates to a non-aqueous electrolyte secondary battery and a battery pack.

Description of the Background Art

It is known that $LiFSO_3$ can be used as an electrolyte solution for non-aqueous electrolyte secondary batteries. For example, Japanese Patent Laying-Open No. 2013-152956 discloses that an electrolyte solution including $LiPF_6$ and $LiFSO_3$ can be used to improve initial charged capacity, input-output properties, and inner-battery impedance characteristics. Japanese Patent Laying-Open No. 2014-170730 discloses that the composition of non-aqueous electrolyte solution can be adjusted to obtain a practically sufficient level of conductivity.

SUMMARY OF THE INVENTION

However, it was found that battery properties of a battery including a $LiFSO_3$-containing electrolyte solution could degrade during repeated high-rate charging and discharging.
An object of the present disclosure is to provide a non-aqueous electrolyte secondary battery and a battery pack in which output resistance can be reduced and capacity retention decrease can be reduced even when LiFSOa-containing electrolyte solution is used and even when charging and discharging are repeated at a high rate.

[1] A non-aqueous electrolyte secondary battery comprising:

> an electrode assembly; and
> an electrolyte solution, wherein
> the electrode assembly is a wound-type electrode assembly or a stack-type electrode assembly each of which comprises a positive electrode plate having an active material layer,
> when the electrode assembly is the wound-type electrode assembly, a length of the active material layer in a direction parallel to an axis of winding is 150 mm or more,
> when the electrode assembly is the stack-type electrode assembly,
> a shape of the stack-type electrode assembly in a plan view is square or rectangle, and
> a length of the active material layer in a direction parallel to one side of the square or in a direction parallel to a long side of the rectangle is 150 mm or more,
> to the non-aqueous electrolyte secondary battery, a restraining pressure of 0.5 MPa or more is applied in a stacking direction of the positive electrode plates,
> the electrolyte solution includes $LiFSO_3$, and
> the electrolyte solution has an electrical conductivity of 0.86 S/m or more at 25°C.

[2] The non-aqueous electrolyte secondary battery according to [1], wherein a content of $LiFSO_3$ in the electrolyte solution is from 0.1 mass% to 2.5 mass%.
[3] The non-aqueous electrolyte secondary battery according to [1] or [2], wherein the electrolyte solution has an electrical conductivity of 0.90 S/m or more at 25°C.
[4] The non-aqueous electrolyte secondary battery according to any one of [1] to [3], wherein the electrolyte solution has an electrical conductivity of 0.93 S/m or more at 25°C.
[5] The non-aqueous electrolyte secondary battery according to any one of [1] to [4], wherein the electrolyte solution further includes at least one of $LiPF_6$ and $LiBF_4$.
[6] The non-aqueous electrolyte secondary battery according to any one of [1] to [5], wherein the electrolyte solution further includes vinylene carbonate.
[7] The non-aqueous electrolyte secondary battery according to any one of [1] to [6], wherein the electrolyte solution further includes one or more types selected from the group consisting of ethylene carbonate, ethyl methyl carbonate, and dimethyl carbonate.

[8] A battery pack comprising two or more batteries arranged to be electrically connected to one another, wherein

each of the batteries is a non-aqueous electrolyte secondary battery comprising an electrode assembly and an electrolyte solution,

the electrode assembly is a wound-type electrode assembly or a stack-type electrode assembly each of which comprises a positive electrode plate having an active material layer,

when the electrode assembly is the wound-type electrode assembly, a length of the active material layer in a direction parallel to an axis of winding is 150 mm or more,

when the electrode assembly is the stack-type electrode assembly,

a shape of the stack-type electrode assembly in a plan view is square or rectangle, and

a length of the active material layer in a direction parallel to one side of the square or in a direction parallel to a long side of the rectangle is 150 mm or more,

the electrolyte solution includes $LiFSO_3$, and

the electrolyte solution has an electrical conductivity of 0.86 S/m or more at 25°C, and

the battery pack is restrained in such a manner that a restraining pressure of 0.5 MPa or more is applied in a stacking direction of the positive electrode plates of the batteries.

The foregoing and other objects, features, aspects and advantages of the present invention will become more apparent from the following detailed description of the present invention when taken in conjunction with the accompanying drawings.

DESCRIPTION OF THE PREFERRED EMBODIMENTS

(Non-Aqueous Electrolyte Secondary Battery)

A non-aqueous electrolyte secondary battery according to the present embodiment (hereinafter also called "the present battery (1)") comprises an electrode assembly and an electrolyte solution. The electrode assembly includes a positive electrode plate having a positive electrode active material layer (an active material layer), and it is either a wound-type electrode assembly or a stack-type electrode assembly. When the electrode assembly is a wound-type electrode assembly, the length of the positive electrode active material layer in a direction parallel to the axis of winding is 150 mm or more. When the electrode assembly is a stack-type electrode assembly, the shape of the stack-type electrode assembly in a plan view is square or rectangle, and the length of the positive electrode active material layer in a direction parallel to one side of the square or in a direction parallel to a long side of the rectangle is 150 mm or more. To the present battery (1), a restraining pressure of 0.5 MPa or more is applied in a stacking direction of the positive electrode plates. The electrolyte solution includes $LiFSO_3$, and the electrolyte solution has an electrical conductivity of 0.86 S/m or more at 25°C.

Usually, the electrode assembly has a negative electrode plate and a separator in addition to the positive electrode plate. The negative electrode plate has a negative electrode active material layer including a negative electrode active material. The separator is interposed between the positive electrode plate and the negative electrode plate.

When the electrode assembly is a wound-type electrode assembly, the length of the positive electrode active material layer and that of the negative electrode active material layer in a direction parallel to the axis of winding may be, independently, 150 mm or more, or 180 mm or more, or 200 mm or more, or from 150 mm to 350 mm, or from 180 mm to 350 mm, or from 200 mm to 300 mm. When the electrode assembly is a stack-type electrode assembly the shape of which in a plan view is square or rectangle, the length of the positive electrode active material layer and that of the negative electrode active material layer in a direction parallel to one side of the square, or the length of the positive electrode active material layer and that of the negative electrode active material layer in a direction parallel to the long side of the rectangle may be, independently, 150 mm or more, or 180 mm or more, or 200 mm or more, or from 150 mm to 350 mm, or from 180 mm to 350 mm, or from 200 mm to 300 mm. Preferably, both the length of the positive electrode active material layer of the electrode assembly and the length of the negative electrode active material layer fall within the above-described range.

The restraining pressure applied to the present battery (1) is not particularly limited as long as it is 0.5 MPa or more in the stacking direction of the positive electrode plates. Usually, the stacking direction of the positive electrode plates is the same direction as the stacking direction of the positive electrode plate and the negative electrode plate. The restraining pressure may be from 0.5 MPa to 5 MPa, or from 1 MPa to 4 MPa, or from 2 MPa to 4 MPa. The restraining pressure can be calculated by measuring the load with the use of a load cell. The restraining pressure applied to the present battery (1) may be applied to the present batteries (1) that are in the form of a battery pack. As the method for forming a battery pack, the method for forming a battery pack using a present battery (2) described below may be employed.

The electrolyte solution is usually a non-aqueous electrolyte solution, and preferably obtained by adding a supporting salt in a non-aqueous solvent such as an organic solvent. The electrolyte solution includes $LiFSO_3$. The content of $LiFSO_3$ in the electrolyte solution is preferably from 0.1 mass% to 2.5 mass%, and may be from 0.5 mass% to 2.0 mass%, or from 0.7 mass% to 1.5 mass%. The content of $LiFSO_3$ in the electrolyte solution is the amount of $LiFSO_3$ relative to the total amount of the electrolyte solution.

Examples of the supporting salt that may be included in the electrolyte solution include $LiFSO_3$ described above, as well as $LiPF_6$, $LiBF_4$, $LiClO_4$, LiBOB (lithium bis(oxalato)borate), and the like. The electrolyte solution may include one, two, or more of these. In addition to $LiFSO_3$, the electrolyte solution preferably includes a supporting salt other than $LiFSO_3$, more preferably includes at least one of $LiPF_6$ and $LiBF_4$, and may include $LiPF_6$.

When the electrolyte solution includes at least one of $LiPF_6$ and $LiBF_4$, the concentration of $LiPF_6$ and $LiBF_4$ in the electrolyte solution may be preferably from 0.5 mol/L to 1.5 mol/L, or from 0.7 mol/L to 1.4 mol/L, or from 0.8 mol/L to 1.2 mol/L. This concentration is the total number of moles of $LiPF_6$ and $LiBF_4$ per 1 L of the non-aqueous solvent in the electrolyte solution. When the electrolyte solution includes one of $LiPF_6$ and $LiBF_4$, the concentration is the concentration of the included one, and when the electrolyte solution includes both $LiPF_6$ and $LiBF_4$, the concentration is the total concentration of $LiPF_6$ and $LiBF_4$.

Examples of the non-aqueous solvent that may be included in the electrolyte solution include ethylene carbonate (EC), ethyl methyl carbonate (EMC), dimethyl carbonate (DMC), propylene carbonate (PC), butylene carbonate (BC), diethyl carbonate (DEC), and the like. The electrolyte solution can include one, two, or more non-aqueous solvents among these. Preferably, the electrolyte solution includes one or more types selected from the group consisting EC, EMC, and DMC, more preferably includes EC, EMC, and DMC.

When the non-aqueous solvent used in the electrolyte solution includes EC, DMC, and EMC, they may be included in a mixing ratio of EC:DMC:EMC=(5 to 50):(10 to 70):(10 to 70) (volume ratio), or may be included in a mixing ratio of EC:DMC:EMC=(10 to 40):(20 to 60):(20 to 60) (volume ratio), or may be included in a mixing ratio of EC:DMC:EMC=(20 to 40):(30 to 50):(30 to 50) (volume ratio). Herein, the expression "x to y (x and y represent numerical values) refers to "not less than x and not more than y".

The electrolyte solution may further include an additive. Examples of the additive include vinylene carbonate (VC), vinylethylene carbonate (VEC), fluoroethylene carbonate, and the like. The electrolyte solution can include one, two, or more additives among these. Preferably, the electrolyte solution includes VC. The content of the additive in the electrolyte solution may be from 0.1 mass% to 5 mass%, or from 0.5 mass% to 3 mass%, or from 1 mass% to 2 mass%. The content of the additive in the electrolyte solution is the amount of the additive, or the total amount of additives when two or more additives are included, relative to the total amount of the electrolyte solution.

The electrical conductivity of the electrolyte solution at 25°C is not particularly limited as long as it is 0.86 S/m or more, and it may be 0.88 S/m or more, preferably 0.90 S/m or more, more preferably 0.93 S/m or more. The electrical conductivity of the electrolyte solution at 25°C is not particularly limited, and it may be 1.5 S/m or less, or 1.0 S/m or less. The electrical conductivity of the electrolyte solution can be adjusted by changing the type and content of the supporting salt included in the electrolyte solution, and/or the type, composition, and the like of the non-aqueous solvent. The electrical conductivity of the electrolyte solution can be measured with an electrical conductivity meter in an environment at 25°C.

In a non-aqueous electrolyte secondary battery (hereinafter also called "a secondary battery") in which the length of the active material layer falls within the above-described range and to which the above-mentioned amount of restraining pressure is applied, the salt concentration of the electrolyte solution tends to vary at different positions of the electrode assembly. More specifically, the salt concentration of the electrolyte solution tends to be relatively low at an end of the electrode assembly. As a result, after repeated charging and discharging of the secondary battery, at a position close to an end of the electrode assembly, the electric potential of the positive electrode plate tends to rise to reach the electric potential at which the positive electrode active material can react with $FSO_3^-$. When the electric potential of the positive electrode plate reaches the electric potential for the reaction, transition metal elutes from the positive electrode active material and the eluted transition metal becomes deposited on the negative electrode plate. This is conceivable to be the cause of capacity retention decrease of a secondary battery during repeated high-rate charging and discharging. In contrast to this, in the present battery (1) in which the electrical conductivity of the electrolyte solution falls within the above-described range, it is conceivable that the electric potential of the positive electrode plate tends not to rise and also polarization of the positive electrode plate is reduced even during repeated charging and discharging. As a result, reactions between the positive electrode active material and $FSO_3^-$ can be reduced, and elution of transition metal from the positive electrode active material can also be reduced, and, therefore, capacity retention decrease can be reduced even during repeated high-rate charging and discharging of the present battery (1).

As described so far, the electrode assembly can have the positive electrode plate, the negative electrode plate, and the separator, for example. The electrode assembly is placed inside an exterior package, and into the exterior package accommodating the electrode, the electrolyte solution is injected. The opening of the exterior package through which the electrolyte solution has been injected is sealed with a sealing plate.

The positive electrode plate can have a positive electrode current collector, as well as a positive electrode active material layer formed on the positive electrode current collector. For example, the positive electrode current collector is a metal foil made of an aluminum material such as aluminum and aluminum alloy. The positive electrode active material layer includes a positive electrode active material. Examples of the positive electrode active material include a lithium transition metal oxide of layered type, spinel type, or the like (such as $LiNiCoMnO_2$, $LiNiO_2$, $LiCoO_2$, $LiFeO_2$, $LiMn_2O_4$, $LiNi_{0.5}Mn_{1.5}O_4$, $LiCrMnO_4$, $LiFePO_4$, $LiNi_{1/3}Co_{1/3}Mn_{1/3}O_2$, for example).

The positive electrode active material layer can include either or both of a binder and a conductive aid, in addition to the positive electrode active material. Examples of the binder include styrene-butadiene rubber (SBR), polyvinylidene difluoride (PVdF), polytetrafluoroethylene (PTFE), and the like. Examples of the conductive aid include carbon materials such as fibrous carbon, carbon black (such as acetylene black, Ketjenblack), coke, and activated carbon. Examples of the fibrous carbon include carbon nanotubes (hereinafter also called "CNTs"). The CNTs may be single-walled carbon nanotubes (SWCNTs), or may be multi-walled carbon nanotubes such as double-walled carbon nanotubes (DWCNTs).

The negative electrode plate can have a negative electrode current collector, as well as a negative electrode active material layer formed on the negative electrode current collector. For example, the negative electrode current collector is a metal foil made of a copper material such as copper and copper alloy. The negative electrode active material layer includes a negative electrode active material. Examples of the negative electrode active material include a carbon-based active material that includes a carbon (C) atom, such as graphite; and a metal-based active material that includes a metallic element such as an elemental metal or a metal oxide including an element selected from the group consisting of silicon (Si), tin (Sn), antimony (Sb), bismuth (Bi), titanium (Ti), and germanium (Ge). The negative electrode active material layer may include a Si-based active material that includes a silicon element, as a metal-based active material.

Examples of the Si-based active material include the elemental silicon, SiC (a composite material of silicon and carbon; for example, silicon nanoparticles dispersed inside porous carbon particles), SiOx, LixSiyOz, and the like. The Si-based active material expands and shrinks to a great extent during charging and discharging, and, as a result, the salt concentration of the electrolyte solution tends to become non-uniform during repeated high-rate charging and discharging. In the present battery (1) in which the electrical conductivity of the electrolyte solution falls within the above-described range, capacity retention decrease can be reduced even when a negative electrode active material including the Si-based active material is included and even during repeated high-rate charging and discharging.

The negative electrode active material layer can include either or both of a binder and a conductive aid, in addition to the negative electrode active material. Examples of the binder include cellulose-based binders such as carboxymethylcellulose (CMC), methylcellulose (MC), and hydroxypropylcellulose; and styrene-butadiene rubber (SBR), polyacrylic acid (PAA), acrylonitrile butadiene rubber (NBR), polyvinylidene difluoride (PVdF), polytetrafluoroethylene (PTFE), and the like. Examples of the conductive aid include those described above.

Examples of the separator include a porous sheet (such as a film, a nonwoven fabric) made of a resin such as polyethylene, polypropylene, polyester, cellulose, and polyamide. The porous sheet may have a monolayer structure, or may have a multilayer structure of two or more layers. The separator may have a functional layer on the surface of the porous sheet. The functional layer may be at least one of a heat-resistant layer, and an adhesive layer which is for adhesion to the positive electrode plate and the negative electrode plate.

The exterior package is a housing for accommodating the electrode assembly, and has an opening through which the electrode assembly is to be inserted. The opening of the exterior package can be sealed with the sealing plate. Each of the exterior package and the sealing plate is preferably made of metal, can be formed with aluminum, aluminum alloy, iron, iron alloy, or the like, and, for example, can be formed with an aluminum laminated film.

(Battery Pack)

A battery pack according to the present embodiment comprises two or more batteries that are arranged to be electrically connected to one another. Each battery of the battery pack is a non-aqueous electrolyte secondary battery (hereinafter also called "the present battery (2)"), and it includes an electrode assembly and an electrolyte solution. The electrode assembly is a wound-type electrode assembly or a stack-type electrode assembly each of which comprises a positive electrode plate having an active material layer. When the electrode assembly is a wound-type electrode assembly, the length of the positive electrode active material layer in a direction parallel to the axis of winding is 150 mm or more. When the electrode assembly is a stack-type electrode assembly, the shape of the stack-type electrode assembly in a plan view is square or rectangle, and the length of the positive electrode active material layer in a direction parallel to one side of the square or in a direction parallel to the long side of the rectangle is 150 mm or more. The electrolyte solution includes $LiFSO_3$, and the electrolyte solution has an electrical conductivity of 0.86 S/m or more at 25°C. The battery pack is restrained in such a manner that a restraining pressure of 0.5 MPa or more is applied in the stacking direction of the positive electrode plates of the present batteries (2).

Examples of the electrode assembly and the electrolyte solution included in the present battery (2) include the electrode assembly and the electrolyte solution included in the present battery (1). Usually, the electrode assembly and the electrolyte solution are placed inside the above-described exterior package, and the opening of the exterior package is sealed with the sealing plate. Each of the length of the positive electrode active material layer, the length of the negative electrode active material layer, and the electrical conductivity of the electrolyte solution can be designed to fall within the range described for the present battery (1).

Usually, the battery pack comprises two or more present batteries (2) positioned adjacent to one another in the stacking direction of the positive electrode plates of the present batteries (2), where the present batteries (2) are arranged in such a manner that the positive electrode plates of the present batteries (2) are stacked in the same direction.

The restraining pressure applied to the battery pack may be from 0.5 MPa to 5 MPa, or from 1 MPa to 4 MPa, or from 2 MPa to 4 MPa. The restraining pressure can be calculated by measuring the load with the use of a load cell. Preferably, the restraining pressure applied to the battery pack is determined so that a restraining pressure of 0.5 MPa or more is applied to the present batteries (2) in the stacking direction of the positive electrode plates. The restraining pressure applied to the present batteries (2) may be from 0.5 MPa to 5 MPa, or from 1 MPa to 4 MPa, or from 2 MPa to 4 MPa.

The present batteries (2) of the battery pack may be the present batteries (1). For example, the battery pack may comprise two or more present batteries (1) arranged to be electrically connected to one another. In this case, the battery pack may comprise two or more present batteries (1) positioned adjacent to one another in the stacking direction of the positive electrode plates of the present batteries (1), where the present batteries (1) may be arranged in such a manner that the positive electrode plates of the present batteries (1) are stacked in the same direction. The restraining pressure applied to the present batteries (1) may be the restraining pressure that is applied to the present batteries (1) that are in the form of a battery pack.

[Examples]

In the following, the present disclosure will be described in further detail by way of Examples, Comparative Examples, and Reference Examples.

[Comparative Example 1]

(Production of Positive Electrode Plate)

LiNiCoMnO$_2$ as a positive electrode active material, acetylene black (AB) as a conductive aid, and polyvinylidene difluoride (PVdF) as a binder were used in a mass ratio of LiNiCoMnO$_2$:AB:PVdF=100:1:1, and mixed with N-methylpyrrolidone (NMP) to obtain a positive electrode composite material slurry. The resulting positive electrode composite material slurry was applied to an aluminum foil as a positive electrode current collector, dried, and compressed to a certain thickness to form a positive electrode active material layer on the aluminum foil, followed by cutting the resultant into a certain width to obtain a positive electrode plate. In the widthwise direction, the resulting positive electrode plate had a region where the positive electrode active material layer was formed on the aluminum foil, as well as a region where the aluminum foil was exposed without the positive electrode active material layer formed thereon. The width of the positive electrode active material layer of the positive electrode plate (the length thereof in a direction parallel to the axis of winding of the electrode assembly which is described below) was 150 mm.

(Production of Negative Electrode Plate)

Graphite as a negative electrode active material and styrene-butadiene rubber (SBR) and carboxymethylcellulose (CMC) as binders were used in a mass ratio of graphite:SBR:CMC=100:1:1, and mixed with water to obtain a negative electrode composite material slurry. The resulting negative electrode composite material slurry was applied to a copper foil as a negative electrode current collector, dried, and compressed to a certain thickness to form a negative electrode active material layer on the copper foil, followed by cutting the resultant into a certain width to obtain a negative electrode plate. In the widthwise direction, the resulting negative electrode plate had a region where the negative electrode active material layer was formed on the copper foil, as well as a region where the copper foil was exposed without the negative electrode active material layer formed thereon. The width of the negative electrode active material layer of the negative electrode plate (the length thereof in a direction parallel to the axis of winding of the electrode assembly which is described below) was 155 mm.

(Production of Electrode Assembly)

A separator having a three-layer structure (polypropylene/polyethylene/polypropylene) was prepared. The positive electrode plate and the negative electrode plate obtained in the above-described manner were stacked and wound with the separator interposed therebetween, to obtain a wound-type electrode assembly. The resulting wound-type electrode assembly had a configuration where the positive electrode current collector was exposed at one end in a direction parallel to the axis of winding and the negative electrode current collector was exposed at the other end. To the region of the wound-type electrode assembly where the positive electrode current collector was exposed, an aluminum plate for external current collection was welded, and to the region where the negative electrode current collector was exposed, a copper plate for external current collection was welded, followed by placing the wound-type electrode assembly into an exterior package that was made of an aluminum laminated film.

$LiPF_6$ was used as a supporting salt, and a mixed solvent of ethylene carbonate (EC), ethyl methyl carbonate (EMC), and dimethyl carbonate (DMC) (EC:EMC:DMC=30:50:20 (volume ratio)) was used as a non-aqueous solvent; $LiPF_6$, vinylene carbonate (VC), and the mixed solvent were mixed in such a manner that the concentration of $LiPF_6$ became 1.1 mol/L and the content of VC as an additive became 1 mass%, and thus a comparative electrolyte solution (1) was prepared. The resulting comparative electrolyte solution (1) was injected into the exterior package in which the wound-type electrode assembly was placed, and the opening of the exterior package was sealed with the sealing plate to obtain an entire structure.

On each of the two sides of the entire structure parallel to the axis of winding of the wound-type electrode assembly (which are, in other words, the two sides orthogonal to the stacking direction of the positive electrode plate and the negative electrode plate of the wound-type electrode assembly), a stainless steel restraint plate was placed, and thereby the entire structure was sandwiched between the two restraint plates. The two restraint plates were fastened to one another with bolts and nuts at the four corners, and the load was adjusted so that a restraining pressure of 0.5 MPa was applied to the entire structure, to obtain a non-aqueous electrolyte secondary battery. The restraining pressure can be calculated by measuring the load with the use of a load cell.

[Comparative Example 2]

A comparative electrolyte solution (2) was prepared in the same manner as in the preparation of the comparative electrolyte solution (1) except that $LiPF_6$ and $LiFSO_3$ were used as supporting salts, the concentration of $LiPF_6$ was 1.1 mol/L, the content of $LiFSO_3$ was 1 mass%, and the content of VC was 1 mass%. A non-aqueous electrolyte secondary battery was obtained in the same manner as in Comparative Example 1 except that the comparative electrolyte solution (2) was used instead of the comparative electrolyte solution (1).

[Comparative Example 3, Examples 1 to 4]

A comparative electrolyte solution (3) and electrolyte solutions (1) to (4) were prepared in the same manner as in the preparation of the comparative electrolyte solution (2) except that mixed solvents of EC, EMC, and DMC in the mixing ratios specified in Table 1 were used. Non-aqueous electrolyte secondary batteries were obtained in the same manner as in Comparative Example 1 except that the comparative electrolyte solution (3) and the electrolyte solutions (1) to (4) were used instead of the comparative electrolyte solution (1).

[Comparative Example 4]

A comparative electrolyte solution (4) was prepared in the same manner as in the preparation of the comparative electrolyte solution (1) except that a mixed solvent of EC:EMC:DMC=30:30:40 (volume ratio) was used. A non-aqueous electrolyte secondary battery was obtained in the same manner as in Comparative Example 1 except that the comparative electrolyte solution (4) was used instead of the comparative electrolyte solution (1).

[Examples 5 and 6]

Electrolyte solutions (5) and (6) were prepared in the same manner as in the preparation of the electrolyte solution (3) in Example 3 except that $LiFSO_3$ was used in the content specified in Table 1. Non-aqueous electrolyte secondary batteries were obtained in the same manner as in Comparative Example 1 except that the electrolyte solutions (5) and (6) were used instead of the comparative electrolyte solution (1).

[Comparative Example 5]

A non-aqueous electrolyte secondary battery was obtained in the same manner as in Example 3 except that no restraining pressure was applied.

[Reference Example 1]

A wound-type electrode assembly was obtained in the same manner as in Comparative Example 1 except that the width of the positive electrode active material layer of the positive electrode plate (the length thereof in a direction parallel to the axis of winding of the electrode assembly) was changed to 100 mm and the width of the negative electrode active material layer of the negative electrode plate (the length thereof in a direction parallel to the axis of winding of the electrode assembly) was changed to 103 mm, and then, with the use of the resulting wound-type electrode assembly, a non-aqueous electrolyte secondary battery was obtained.

[Reference Example 2]

A wound-type electrode assembly was obtained in the same manner as in Comparative Example 2 except that the width of the positive electrode active material layer of the positive electrode plate (the length thereof in a direction parallel to the axis of winding of the electrode assembly) was changed to 100 mm and the width of the negative electrode active material layer of the negative electrode plate (the length thereof in a direction parallel to the axis of winding of the electrode assembly) was changed to 103 mm, and then, with the use of the resulting wound-type electrode assembly, a non-aqueous electrolyte secondary battery was obtained.

[Measurement of Electrical Conductivity]

The electrical conductivity of the electrolyte solution was measured with an electrical conductivity meter (manufactured by DKK-TOA Corporation) inside a thermostatic chamber at 25°C.

<Evaluation>

(Initial Activation)

In an environment at 25°C, the non-aqueous electrolyte secondary battery obtained in the above-described manner was charged at a value of current of C/10 to reach 4.2 Vcccv (constant-current·constant-voltage), and stored at 60°C for 24 hours. Subsequently, discharging was carried out at a value of current of C/10 to reach a potential of 3 V, and thus, initial activation of the non-aqueous electrolyte secondary battery was carried out.

[Evaluation of Output Resistance]

The non-aqueous electrolyte secondary battery after the initial activation was charged in an environment at 25°C at a value of current of C/3 to reach an SOC (charging ratio) of 50%, followed by 30 minutes of resting, and then the voltage of the non-aqueous electrolyte secondary battery, V0, was measured. Subsequently, discharging was carried out in an environment at 25°C at a value of current of 2 C for 10 seconds, and the voltage of the non-aqueous electrolyte secondary battery after a lapse of 10 seconds, V1, was measured. By the following equation, the resistance of the non-aqueous electrolyte secondary battery was calculated.

$$\text{Resistance } [\Omega] = (V0-V1)/2C \text{ (value of current)}$$

The values of resistance of Comparative Examples 2 to 5 and Examples 1 to 6 were converted into relative values, relative to the value of resistance of Comparative Example 1 defined as 100% (reference). The value of resistance of Reference Example 2 was converted into a relative value, relative to the value of resistance of Reference Example 1 defined as 100% (reference). Results are shown in Table 1.

[Cycle Testing]

In a thermostatic chamber at 25°C, the non-aqueous electrolyte secondary battery after the initial activation was charged at a value of current of 2 C to reach 4.2 Vcccv (constant-current-constant-voltage) and then discharged at a value of current of 1 C to reach a potential of 3 V; this sequence of charging and discharging was regarded as a single cycle, and this cycle was repeated. By the following equation, capacity retention [%] was calculated as the proportion of the discharged capacity at the 500th cycle, W500, to the discharged capacity at the first cycle, W1. Results are shown in Table 1.

$$\text{Capacity retention [\%]} = (W500/W1) \times 100$$

[Table 1]

| | Width of positive electrode composite material layer [mm] | Restrain-ing pressure [MPa] | Electrolyte solution | | | | | Evaluation | |
| | | | Electrical conductivity [S/m] | Supporting salt | | Additive | Mixed solvent | Output resistance* | Capacity retention |
| | | | | LiPF$_6$ [mol/L] | LiFSO$_3$ [mass%] | VC [mass%] | EC:EMC:DMC Volume ratio | [%] | [%] |
| Comp. Ex. 1 | 150 | 0.5 | 0.84 | 1.1 | - | 1 | 30:50:20 | 100 | 90 |
| Comp. Ex. 2 | 150 | 0.5 | 0.84 | 1.1 | 1 | 1 | 30:50:20 | 96 | 85 |
| Comp. Ex. 3 | 150 | 0.5 | 0.85 | 1.1 | 1 | 1 | 30:40:30 | 94 | 86 |
| Ex. 1 | 150 | 0.5 | 0.89 | 1.1 | 1 | 1 | 30:35:35 | 93 | 89 |
| Ex. 2 | 150 | 0.5 | 0.90 | 1.1 | 1 | 1 | 30:33:37 | 91 | 92 |
| Ex. 3 | 150 | 0.5 | 0.93 | 1.1 | 1 | 1 | 30:30:40 | 91 | 93 |
| Ex. 4 | 150 | 0.5 | 0.97 | 1.1 | 1 | 1 | 30:20:50 | 90 | 93 |
| Comp. Ex. 4 | 150 | 0.5 | 0.93 | 1.1 | - | 1 | 30:30:40 | 100 | 92 |
| Ex. 5 | 150 | 0.5 | 0.93 | 1.1 | 0.1 | 1 | 30:30:40 | 99 | 93 |
| Ex. 6 | 150 | 0.5 | 0.91 | 1.1 | 2.5 | 1 | 30:30:40 | 90 | 93 |
| Comp. Ex. 5 | 150 | 0 | 0.93 | 1.1 | 1 | 1 | 30:30:40 | 105 | 83 |
| Ref. Ex. 1 | 100 | 0.5 | 0.84 | 1.1 | - | 1 | 30:50:20 | 100 | 90 |
| Ref. Ex. 2 | 100 | 0.5 | 0.84 | 1.1 | 1 | 1 | 30:50:20 | 93 | 92 |

*: The values of Comparative Examples 2 to 5 and Examples 1 to 6 are relative values, relative to the value of Comparative Example 1 regarded as 100%, and the value of

Reference Example 2 is a relative value relative to the value of Reference Example 1 regarded as 100%.

In Comparative Example 2 where an electrolyte solution including $LiFSO_3$ was used, as compared to Comparative Example 1 where an electrolyte solution not including $LiFSO_3$ was used, output resistance decreased but capacity retention also decreased. As for Comparative Example 2, it is conjectured as follows: the output resistance decreased due to $LiFSO_3$ thus included, but during high-rate charging, the positive electrode active material reacted with $FSO_3^-$ and transition metal eluted from the positive electrode active material and thereby the capacity retention decreased.

From comparison of Comparative Example 3 with Examples 1 to 4, it is indicated that as the value of the volume ratio between EMC and DMC (EMC/DMC) in the mixed solvent decreases, the electrical conductivity increases, the output resistance decreases, and the capacity retention is enhanced. In addition, from comparison of Comparative Example 4 with Examples 5 and 6, it is indicated that as the content of $LiFSO_3$ in the mixed solvent increases, output resistance can be decreased and good capacity retention can be achieved. It is conceivable that the inclusion of $LiFSO_3$ reduced the output resistance and the increased electrical conductivity of the electrolyte solution reduced reactions between the positive electrode active material and $FSO_3^-$ during high-rate charging and also reduced elution of transition metal from the positive electrode active material, and, as a result of these phenomena, the capacity retention was enhanced.

It is conceivable that in Comparative Example 5 where no restraining pressure was applied, as compared to Example 3 where restraining pressure was applied, the distance between the electrodes increased and thereby the output resistance increased. This could have degraded the occlusion and release of Li ions to cause a decrease of capacity retention in Comparative Example 3 as compared to Example 3.

In Reference Examples 1 and 2, as compared to Comparative Examples 1 and 2, the width of the positive electrode active material layer is small. From comparison of Reference Example 2 with Comparative Example 2, it is indicated that when the width of the positive electrode active material layer is small, the salt concentration of the electrolyte solution tends to be uniform, reactions between the positive electrode active material and $FSO_3^-$ tend not to occur even during high-rate charging, and elution of transition metal from the positive electrode active material tends not to occur. This could be the cause of the enhanced capacity retention in Reference Example 2 as compared to Comparative Example 2.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A non-aqueous electrolyte secondary battery comprising:

   an electrode assembly; and
   an electrolyte solution, wherein
   the electrode assembly is a wound-type electrode assembly or a stack-type electrode assembly each of which comprises a positive electrode plate having an active material layer,
   when the electrode assembly is the wound-type electrode assembly, a length of the active material layer in a direction parallel to an axis of winding is 150 mm or more,
   when the electrode assembly is the stack-type electrode assembly,

   a shape of the stack-type electrode assembly in a plan view is square or rectangle, and
   a length of the active material layer in a direction parallel to one side of the square or in a direction parallel to a long side of the rectangle is 150 mm or more,

   to the non-aqueous electrolyte secondary battery, a restraining pressure of 0.5 MPa or more is applied in a stacking direction of the positive electrode plates,
   the electrolyte solution includes $LiFSO_3$, and
   the electrolyte solution has an electrical conductivity of 0.86 S/m or more at 25°C.

2. The non-aqueous electrolyte secondary battery according to claim 1, wherein a content of $LiFSO_3$ in the electrolyte solution is from 0.1 mass% to 2.5 mass%.

3. The non-aqueous electrolyte secondary battery according to claim 1 or 2, wherein the electrolyte solution has an electrical conductivity of 0.90 S/m or more at 25°C.

4. The non-aqueous electrolyte secondary battery according to any one of claims 1 to 3, wherein the electrolyte solution has an electrical conductivity of 0.93 S/m or more at 25°C.

5. The non-aqueous electrolyte secondary battery according to any one of claims 1 to 4, wherein the electrolyte solution further includes at least one of $LiPF_6$ and $LiBF_4$.

6. The non-aqueous electrolyte secondary battery according to any one of claims 1 to 5, wherein the electrolyte solution further includes vinylene carbonate.

7. The non-aqueous electrolyte secondary battery according to any one of claims 1 to 6, wherein the electrolyte solution further includes one or more types selected from the group consisting of ethylene carbonate, ethyl methyl carbonate, and dimethyl carbonate.

8. A battery pack comprising two or more batteries arranged to be electrically connected to one another, wherein

each of the batteries is a non-aqueous electrolyte secondary battery comprising an electrode assembly and an electrolyte solution,

the electrode assembly is a wound-type electrode assembly or a stack-type electrode assembly each of which comprises a positive electrode plate having an active material layer,
when the electrode assembly is the wound-type electrode assembly, a length of the active material layer in a direction parallel to an axis of winding is 150 mm or more,
when the electrode assembly is the stack-type electrode assembly,

a shape of the stack-type electrode assembly in a plan view is square or rectangle, and
a length of the active material layer in a direction parallel to one side of the square or in a direction parallel to a long side of the rectangle is 150 mm or more,

the electrolyte solution includes $LiFSO_3$, and
the electrolyte solution has an electrical conductivity of 0.86 S/m or more at 25°C, and

the battery pack is restrained in such a manner that a restraining pressure of 0.5 MPa or more is applied in a stacking direction of the positive electrode plates of the batteries.

Europäisches
Patentamt

European
Patent Office

Office européen
des brevets

# EUROPEAN SEARCH REPORT

**Application Number**

EP 24 16 4026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/271338 A1 (KAMINE HIROKAZU [JP] ET AL) 25 August 2022 (2022-08-25)<br>* page 2, paragraph 27-29 - page 3, paragraphs 39,41,49 *<br>* page 4, paragraph 64 - page 13, paragraph 193 *<br>* page 26, paragraphs 367,371,372 - page 27, paragraph 382 *<br>* page 30, paragraph 403 *<br>- - - - - | 1-8 | INV.<br>H01M10/04<br>H01M10/0567<br>H01M10/0568<br>H01M10/0569<br>H01M10/0585<br>H01M10/0587 |
| Y | US 2016/380299 A1 (UMEYAMA HIROYA [JP] ET AL) 29 December 2016 (2016-12-29)<br>* page 4, paragraph 24 - page 12, paragraph 90 *<br>- - - - - | 1-8 | |
| Y | WO 2022/210643 A1 (GS YUASA INT LTD [JP]) 6 October 2022 (2022-10-06)<br>* paragraphs [0021], [0022] *<br>- - - - - | 1-8 | |
| A,D | EP 2 535 976 B1 (MITSUBISHI CHEM CORP [JP]) 2 September 2015 (2015-09-02)<br>* the whole document *<br>- - - - - | 1-8 | **TECHNICAL FIELDS SEARCHED (IPC)**<br><br>H01M |

The present search report has been drawn up for all claims

| Place of search | Date of completion of the search | Examiner |
|---|---|---|
| The Hague | 27 September 2024 | Boussard, Nadège |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 4026

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | | Publication date | Patent family member(s) | | Publication date |
|---|---|---|---|---|---|
| US 2022271338 | A1 | 25-08-2022 | CN | 114342147 A | 12-04-2022 |
| | | | CN | 115939520 A | 07-04-2023 |
| | | | EP | 3998657 A1 | 18-05-2022 |
| | | | EP | 4280367 A2 | 22-11-2023 |
| | | | JP | 6916408 B1 | 11-08-2021 |
| | | | JP | 6953649 B1 | 27-10-2021 |
| | | | JP | 2022008276 A | 13-01-2022 |
| | | | JP | WO2021049648 A1 | 27-09-2021 |
| | | | KR | 20220009486 A | 24-01-2022 |
| | | | KR | 20220150997 A | 11-11-2022 |
| | | | US | 2022271338 A1 | 25-08-2022 |
| | | | US | 2024297342 A1 | 05-09-2024 |
| | | | WO | 2021049648 A1 | 18-03-2021 |
| US 2016380299 | A1 | 29-12-2016 | CN | 106299444 A | 04-01-2017 |
| | | | DE | 102016111020 A1 | 29-12-2016 |
| | | | JP | 6202347 B2 | 27-09-2017 |
| | | | JP | 2017010878 A | 12-01-2017 |
| | | | KR | 20170001604 A | 04-01-2017 |
| | | | US | 2016380299 A1 | 29-12-2016 |
| WO 2022210643 | A1 | 06-10-2022 | CN | 117121260 A | 24-11-2023 |
| | | | EP | 4300524 A1 | 03-01-2024 |
| | | | JP | WO2022210643 A1 | 06-10-2022 |
| | | | US | 2024234791 A1 | 11-07-2024 |
| | | | WO | 2022210643 A1 | 06-10-2022 |
| EP 2535976 | B1 | 02-09-2015 | CN | 102754268 A | 24-10-2012 |
| | | | CN | 104167564 A | 26-11-2014 |
| | | | EP | 2535976 A1 | 19-12-2012 |
| | | | EP | 2958181 A1 | 23-12-2015 |
| | | | JP | 5353923 B2 | 27-11-2013 |
| | | | JP | 5831493 B2 | 09-12-2015 |
| | | | JP | 6187566 B2 | 30-08-2017 |
| | | | JP | 2011187440 A | 22-09-2011 |
| | | | JP | 2013152956 A | 08-08-2013 |
| | | | JP | 2016029668 A | 03-03-2016 |
| | | | KR | 20120133378 A | 10-12-2012 |
| | | | KR | 20140007000 A | 16-01-2014 |
| | | | KR | 20160043149 A | 20-04-2016 |
| | | | US | 2012308881 A1 | 06-12-2012 |
| | | | US | 2013280622 A1 | 24-10-2013 |
| | | | WO | 2011099585 A1 | 18-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023075495 A
- JP 2013152956 A

- JP 2014170730 A